# EUROPÄISCHE PATENTANMELDUNG

(11) **EP 1 464 858 A2**
(43) Veröffentlichungstag der Anmeldung: **06.10.2004**
(21) Anmeldenummer: 04007756.2
(22) Anmeldetag: 31.03.2004
(51) Int. Cl.: F16D 13/72, F16D 13/64

(54) **Kupplungsanordnung**

(30) Priorität: 03.04.2003 DE 10315169
(71) Anmelder: ZF Sachs AG, 97424 Schweinfurt (DE)
(72) Erfinder: Sudau, Jörg, Dipl.-Ing., 97464 Niederwerrn (DE)

(57) **Zusammenfassung**

Eine Kupplungsanordnung, insbesondere für ein Kraftfahrzeug, umfasst eine mit Fluid gefüllte oder füllbare Gehäuseanordnung (12), wenigstens ein mit der Gehäuseanordnung (12) um eine Drehachse (A) gemeinsam drehbares erstes Reiborgan (32, 34, 36), wenigstens ein mit einem Abtriebsorgan um die Drehachse (A) gemeinsam drehbares zweites Reiborgan (50, 52), das zur Herstellung einer Reibwechselwirkung in Anlage an wenigstens einem ersten Reiborgan (32, 34, 36) bringbar ist und ist dadurch gekennzeichnet durch, dass das wenigstens eine erste Reiborgan (32, 34, 36) oder das wenigstens eine zweite Reiborgan (50') einen Reibbelagträger (48) aufweist, der an jeder axialen Seite, an der dieses Reiborgan reibend wirksam ist, eine Reibbelaganordnung (44, 46) trägt, dass wenigstens bei einem einen Reibbelagträger (48) mit Reibbelaganordnung (44, 46) aufweisenden Reiborgan (32, 34, 36) eine Fluidförderflächenanordnung (84, 86, 88) zur Erzeugung einer die Reiborgane (32, 34, 36, 50, 52) wenigstens bereichsweise umströmenden Fluidzirkulation vorgesehen ist.

## Beschreibung

Die vorliegende Erfindung betrifft eine Kupplungsanordnung, insbesondere für ein Kraftfahrzeug, umfassend eine mit Fluid gefüllte oder füllbare Gehäuseanordnung, wenigstens ein mit der Gehäuseanordnung um eine Drehachse gemeinsam drehbares erstes Reiborgan, wenigstens ein mit einem Abtriebsorgan um die Drehachse gemeinsam drehbares zweites Reiborgan, das zur Herstellung einer Reibwechselwirkung in Anlage an wenigstens einem ersten Reiborgan bringbar ist.

Eine derartige Kupplungsanordnung ist aus der DE 101 25 628 A1 bekannt. Bei einer in dieser Druckschrift gezeigten Ausgestaltungsform tragen die ersten und zweiten Reiborgane bzw. jeweilige Reibbelagträger derselben an einer axialen Seite einen Reibbelag, während an der anderen axialen Seite unmittelbar der Reibbelagträger reibend in Wechselwirkung mit einem Reibbelag des in axialer Richtung nächsten Reiborgans tritt. Daraus resultiert, dass trotz der Fähigkeit, durch jeweilige Fluidförderflächen eine die Reiborgane umströmende Zirkulation aufzubauen, die Reiborgane im Bereich ihrer Reibbelagträger, die im Allgemeinen aus Metall- bzw. Blechmaterial aufgebaut sind, thermisch sehr stark belastet werden. Die in jedem der Reibbelagträger somit entstehende bzw. aufgenommene Wärme verteilt sich auf Grund der guten Wärmeleitfähigkeit dieser Reibbelagträger sehr schnell und sehr gleichmäßig im gesamten Volumen derselben und gelangt somit auch in denjenigen Bereich, in dem ein jeweiliger Reibbelagträger mit einem daran getragenen Reibbelag im Allgemeinen durch Verkleben verbunden ist. Dies belastet die Klebeverbindung und kann im Extremfall, also beispielsweise bei nur teilweiser Fluidbefüllung des Gehäuses und länger anhaltendem Kupplungsschlupf, sogar zum Loslösen eines Reibbelags bzw. zum zumindest teilweisen Beschädigen der Klebeverbindung führen. Aus dieser Druckschrift sind weiterhin Kupplungsanordnungen bekannt, bei welchen erste und zweite Reiborgane jeweils Reibbeläge an beiden Seiten eines Reibbelagträgers aufweisen. Zwischen zwei erste Reiborgane, die an beiden axialen Seiten Reibbeläge tragen, greift jeweils ein zweites Reiborgan ein, das plattenartig ausgebildet ist und keine Reibbeläge trägt, und umgekehrt. Bei dieser Anordnung ist es jedoch erforderlich, in demjenigen Bereich, in welchem ein an beiden Seiten Reibbeläge aufweisendes erstes Reiborgan unmittelbar auf ein an beiden axialen Seiten Reibbeläge tragendes zweites Reiborgan angrenzt, ein Zwischenreiborgan einzulegen, das keine Reibbeläge trägt. Hier sind also zwei beispielsweise mit der Gehäuseanordnung drehfest verbundene Reiborgane unmittelbar benachbart vorgesehen, so dass ohne den Gewinn einer zusätzlichen Reibflächenpaarung axialer Bauraum beansprucht wird.

Es ist die Aufgabe der vorliegenden Erfindung eine gattungsgemäße Kupplungsanordnung derart weiterzubilden, dass bei der Möglichkeit, eine axial kompakte Anordnung bereitzustellen, die thermische Belastung insbesondere im Bereich der Reiborgane gemindert werden kann.

Erfindungsgemäß wird diese Aufgabe gelöst durch eine Kupplungsanordnung, insbesondere für ein Kraftfahrzeug, umfassend eine mit Fluid gefüllte oder füllbare Gehäuseanordnung, wenigstens ein mit der Gehäuseanordnung um eine Drehachse gemeinsam drehbares erstes Reiborgan, wenigstens ein mit einem Abtriebsorgan um die Drehachse gemeinsam drehbares zweites Reiborgan, das zur Herstellung einer Reibwechselwirkung in Anlage an wenigstens einem ersten Reiborgan bringbar ist.

Dabei ist dann weiter vorgesehen, dass das wenigstens eine erste Reiborgan oder das wenigstens eine zweite Reiborgan einen Reibbelagträger aufweist, der an jeder axialen Seite, an der dieses Reiborgan reibend wirksam ist, eine Reibbelaganordnung trägt, und dass wenigstens bei einem einen Reibbelagträger mit Reibbelaganordnung aufweisenden Reiborgan eine Fluidförderflächenanordnung zur Erzeugung einer die Reiborgane wenigstens bereichsweise umströmenden Fluidzirkulation vorgesehen ist.

Durch das Vorsehen von Reiborganen, die an jeder Seite, an der sie reibend wirksam werden, Reibbeläge tragen, und von Reiborganen, die keine Reibbeläge tragen, wird erreicht, dass diejenigen Reiborgane, bei welchen Reibbeläge vorgesehen sind, auf Grund der thermischen Isolationswirkung der Reibbeläge weniger stark thermisch belastet werden. Dies hat zur Folge, dass insbesondere bei Klebeverbindung zwischen den Reibbelägen und den Reibbelagträgern die Gefahr einer Beschädigung nicht besteht. Vielmehr wird die im Schlupfzustand auftretende Wärme verstärkt von den keine und zwar an keiner reibend wirksam werdenden Seite tragenden Reiborganen aufgenommen, in deren Bereich aber auch die Gefahr der Beschädigung beispielsweise einer Klebeverbindung nicht besteht.

Durch den erfindungsgemäßen Aufbau wird es bei Beibehalt der Möglichkeit, eine effiziente Zirkulation im Bereich der Reiborgane zu erzeugen, möglich, dass in axialer Richtung nicht zwei erste Reiborgane unmittelbar aufeinander folgen und dass in axialer Richtung nicht zwei zweite Reiborgane unmittelbar aufeinander folgen. Somit werden alle vorgesehenen und mit der Gehäuseanordnung einerseits oder dem Abtriebsorgan andererseits drehfest gekoppelten Reiborgane in größtmöglichem Ausmaß reibend wirksam, und es entstehen keine toten, nicht reibend in Wechselwirkung tretenden Flächenpaarungen, was bei vorgegebener Anzahl an Reibflächenpaarungen die axiale Baugröße vermindert, bzw. bei vorgegebener axialer Baugröße das Vorsehen einer erhöhten Anzahl an miteinander in Reibwechselwirkung tretenden Flächenpaarungen gestattet.

Diejenigen Reiborgane, die keine Reibbeläge aufweisen, können beispielsweise plattenartig ausgebildet sein, wobei vorzugsweise hier Metallplatten eingesetzt werden.

Um in sehr einfacher Art und Weise die zum verstärkten Abführen von Wärme aus dem Bereich der reibend miteinander in Wechselwirkung tretenden Oberflächen vorteilhafte Fluidzirkulation erzeugen zu können, wird vorgeschlagen, dass die Fluidförderflächenanordnung an einer Reibbelaganordnung oder/und einem Reibbelagträger wenigstens eine in Umfangsrichtung orientierte Fluidförderfläche umfasst.

Dies kann beispielsweise dadurch erlangt werden, dass die Reibbelaganordnung eine Mehrzahl von in Umfangsrichtung aufeinander folgenden Reibbelagsegmenten aufweist, die mit einander zugewandten Umfangsflächen wenigstens einen Teil der Fluidförderflächenanordnung bilden. Alternativ oder zusätzlich ist es auch möglich, dass der Reibbelagträger wenigstens ein Reibbelagtragesegment aufweist, welches mit einer in Umfangsrichtung orientierten Fläche wenigstens einen Teil der Fluidförderflächenanordnung bildet.

Insbesondere wenn die Reibbeläge segmentiert sind, also beispielsweise diskret in Umfangsrichtung aufeinander folgende Abschnitte umfassen, ist es für eine effiziente Fluidzirkulation vorteilhaft, wenn eine Umrisskontur eines Reibbelagträgersegments in einem ein Reibbelagsegment tragenden Bereich im Wesentlichen einer Umrisskontur eines daran getragenen Reibbelagsegments entspricht.

Die vorliegende Erfindung wird nachfolgend mit Bezug auf die beiliegenden Zeichnungen detailliert beschrieben. Es zeigt:
- Fig. 1: eine Teil-Längsschnittansicht einer sogenannten nasslaufenden Kupplungsanordnung;
- Fig. 2: eine Axialansicht eines bei der Kupplungsanordnung der Fig. 1 einsetzbaren Reiborgans;
- Fig. 3: das in Fig. 2 gezeigte Reiborgan in perspektivischer Ansicht;
- Fig. 4: eine Axialansicht eines weiteren bei der Kupplungsanordnung der Fig. 1 einsetzbaren Reiborgans;
- Fig. 5: das in Fig. 4 dargestellte Reiborgan in perspektivischer Ansicht.

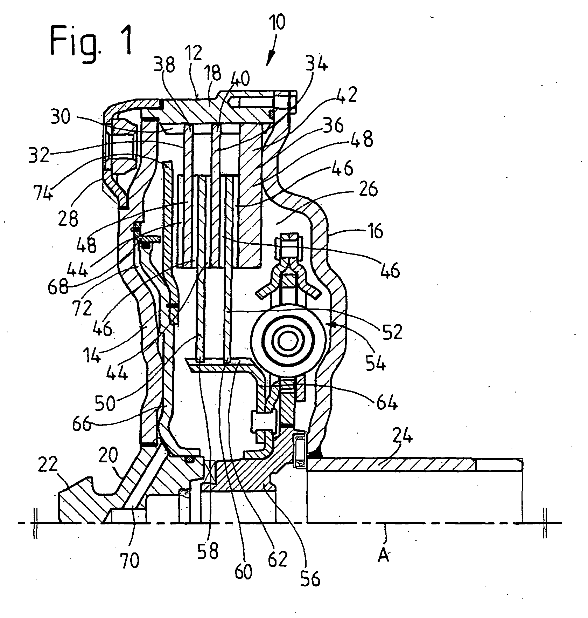

In Fig. 1 ist eine erfindungsgemäße nasslaufende Kupplungsanordnung mit 10 bezeichnet. Die Kupplungsanordnung 10 umfasst ein Gehäuse 12, das zwei im Wesentlichen scheibenartige Gehäuseteile 14, 16 aufweist, die radial außen über ein ringartiges Gehäuseteil 18 miteinander verbunden sind. Das Gehäuseteil 14 ist in seinem radial inneren Bereich ferner mit einer Gehäusenabe 20 verbunden, die einen beispielsweise in eine entsprechende Zentrierausnehmung einer Antriebswelle eingreifenden Lagerzapfen 22 trägt. Das Gehäuseteil 16 ist radial innen mit einer sogenannten Pumpennabe 24 fest verbunden, über die eine beispielsweise an einem Getriebe angeordnete Pumpe betrieben werden kann, um einen Fluiddruck aufzubauen, so dass Fluid in den Innenraum 26 des Gehäuses 12 eingespeist werden kann. Über mehrere Verbindungsstellen 28 kann das Gehäuse 12 über eine Flexplatte oder dergleichen mit einer Antriebswelle, beispielsweise der Kurbelwelle eines Brennkraftmotors, drehfest verbunden werden.

Das radial außen liegende, ringartige Gehäuseteil 18 weist an seiner Innenseite eine Verzahnungsformation 30 auf, die im Wesentlichen in Richtung einer Drehachse A langgestreckt ist. Mit dieser Verzahnung 30 stehen im dargestellten Beispiel drei Reiborgane 32, 34, 36 mit komplementären daran vorgesehenen Verzahnungen 38, 40, 42 in Eingriff. Auf diese Art und Weise sind diese Reiborgane 32, 34, 36 mit dem Gehäuse 12 drehfest, in Richtung der Drehachse A jedoch bewegbar gekoppelt.

Jedes der Reiborgane 32, 34, 36 weist an derjenigen Seite, an der es reibend wirksam wird, jeweils einen Reibbelag 44, 46 auf, der an einem Reibbelagträger 48 getragen ist. Während die beiden Reiborgane 32, 34 an beiden Seiten des jeweiligen Reibbelagträgers 48 einen Reibbelag 44, 46 aufweisen, sind bei dem in der Darstellung der Fig. 1 ganz rechts positionierenden und sich einseitig am Gehäuseteil 16 abstützenden Reiborgan 36 nicht an beiden Seiten des Reibbelagträgers 48 Reibbeläge vorgesehen, sondern nur an derjenigen Seite, an der dieses Reiborgan 36 auch reibend wirksam wird. An der lediglich der Axialabstützung dienenden Seite ist kein Reibbelag vorgesehen.

Zwischen jeweils zwei der Reiborgane 32, 34, 36 greift ein Reiborgan 50 bzw. 52 ein, das nicht mit dem Gehäuse 12 sondern mit einem Abtriebsorgan, also beispielsweise einer in der Fig. 1 nicht dargestellten Abtriebswelle, zur gemeinsamen Drehung gekoppelt ist. In dem dargestellten Falle erfolgt diese Drehkopplung über einen allgemein mit 54 bezeichneten Torsionsschwingungsdämpfer und eine Abtriebsnabe 56. Die beiden Reiborgane 50, 52, die jeweils plattenartig, beispielsweise ebenso wie die Reibbelagträger 48 aus Metall- bzw. Blechmaterial aufgebaut sein können, weisen radial innen jeweilige Verzahnungen 58, 60 auf, die mit einer Verzahnung 62 an einem mit dem Abtriebsorgan drehfest zu koppelnden bzw. ggf. auch selbst als Abtriebsorgan zu betrachtenden Mitnahmeteil 64 ausgebildet ist. Somit sind auch die Reiborgane 50, 52 bezüglich dieses Mitnahmeteils 64 grundsätzlich axial bewegbar, damit aber drehfest gekoppelt.

Ein Kolbenelement 66 ist zwischen der Nabe 20 und einem am Gehäuseteil 14 vorgesehenen Führungselement 68 in Richtung der Drehachse A bewegbar aufgenommen und ist bezüglich der beiden angesprochenen Bauteile durch Einfügung von Dichtungselementen fluiddicht geführt. Über eine Mehrzahl von Fluidströmungsöffnungen 70 kann Fluid in einen zwischen diesem Kolbenelement 66 und dem Gehäuseteil 14 gebildeten bzw. zu bildenden Zwischenraum 72 eingeleitet werden. Durch diese Fluideinleitung, d.h. Erhöhen des Fluiddrucks in diesem Raum 62 bezüglich des Innenraums 26 des Gehäuses 12, wird das Kolbenelement 66 und somit ein damit fest verbundenes Anpresselement 74 in Richtung auf das andere scheibenartige Gehäuseteil 16 zu gepresst. Dabei kommt das Anpresselement 74 in Reibkontakt mit dem Reibbelag 44 des Reiborgans 32 und presst die Reiborgane 32, 50, 34, 52, 36 mit ihren einander gegenüber liegenden Oberflächen in gegenseitige Anlage.

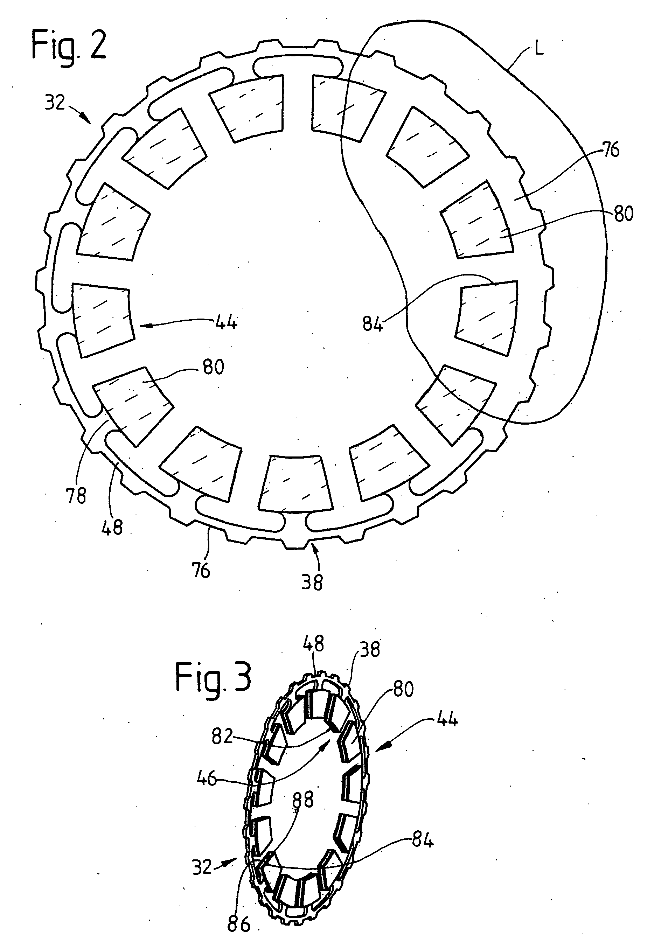

In den Figuren 2 und 3 ist anhand des Reiborgans 32 der grundsätzliche Aufbau der mit dem Gehäuse 12 drehfest gekoppelten Reiborgane 32 und 34 erkennbar. Man erkennt, dass allgemein der beispielsweise aus Stahloder sonstigem Metallmaterial gefertigte Reibbelagträger 48 einen radial äußeren ringartigen Körperabschnitt 76 aufweist, an dessen Außenumfangsbereich die Verzahnung 38 gebildet ist. Von diesem Körperabschnitt 36 erstrecken sich mehrere Belagtragesegmente 78 nach radial innen. An diesen Belagtragesegmenten 78 ist an beiden axialen Seiten jeweils ein Reibbelagsegment 80, 82 des jeweiligen somit aus einer Vielzahl von Reibbelagsegmenten zusammengesetzten Reibbelags 44 bzw. 46 erkennbar.

Durch diese Segmentierung der Reibbeläge 44, 46 und des Reibbelagträgers 48 mit seinen Belagtragesegmenten 78 werden jeweils in Umfangsrichtung orientierte Oberflächen 84, 86, 88 an den Reibbelagsegmenten 80, 82 bzw. den Belagtragesegmenten 78 bereitgestellt. Da die Belagtragesegmente 78 in demjenigen Bereich, in dem sie die Reibbelagsegmente 80, 82 tragen, hinsichtlich ihrer Umrissform auf die Umrissform der Belagsegmente 80, 82 abgestimmt sind, ergibt sich somit bei jeder Gruppe, gebildet aus einem Belagtragesegment 78 und zwei Reibbelagsegmenten 80, 82, eine durch die drei angesprochenen Oberflächen 84, 86, 88 zusammen gebildete Gesamt-Fluidförderfläche. Bei Rotation des Gehäuses 12 wird somit durch die Reiborgane 32, 34 und auch das Reiborgan 36, das zumindest im Bereich des Reibbelags 46 ebenfalls derartige in Umfangsrichtung gerichtete Oberflächen bereitstellen kann, eine Fluidzirkulation induziert, welche die Reiborgane im Bereich ihrer reibend miteinander in Wechselwirkung tretenden Oberflächen umströmt.

Durch die im Bereich der reibend miteinander wirksam werdenden Oberflächen aufgebaute Zirkulation wird dafür gesorgt, dass die insbesondere im Schlupfbetrieb entstehende Reibwärme verstärkt und schneller aus dem Bereich der Reiborgane abgeführt und über das im Innenraum 26 vorhandene Fluid wegtransportiert wird. Somit kann die thermische Belastung der verschiedenen Reiborgane gemindert werden.

Ein wesentlicher Aspekt, bei der in Fig. 1 gezeigten Kupplungsanordnung ist, dass in axialer Richtung aufeinander folgend jeweils ein Reiborgan, das mit dem Gehäuse 12 drehfest gekoppelt ist, auf ein Reiborgan folgt, das mit dem Abtriebsorgan drehfest gekoppelt ist folgt und dass nur eine der Gruppen dieser Reiborgane, in dem in den Figuren 1 bis 3 gezeigten Beispiel die mit dem Gehäuse 12 drehfest gekoppelten Reiborgane 32, 34, 36, Reibbeläge tragen, und zwar an all denjenigen axialen Seiten, an denen diese Reiborgane auch reibend wirksam werden. Es tritt also nicht der Fall auf, dass ein Reibbelagträger, der beispielsweise nur an einer axialen Seite ein Reibbelagsegment oder allgemein einen Reibbelag trägt, an seiner anderen axialen Seite unmittelbar ohne der Zwischenlagerung irgendwelcher thermisch isolierender Elemente reibend wirksam wird. Dies hat zur Folge, dass in dem in Fig. 1 erkennbaren Aufbau der Großteil der im Schlupfbetrieb anfallenden Reibwärme in den plattenartig und an beiden Seiten keine Reibbeläge tragenden Reiborganen 50, 52 aufgenommen wird. Die Reibbeläge 44, 46 tragenden Reiborgane 32, 34, 36 werden nur im Bereich derartiger Reibbeläge reibend wirksam. Dies entlastet insbesondere die im Allgemeinen durch Verklebung erzeugte feste Verbindung der Reibbeläge 44, 46 mit den jeweiligen Reibbelagträgern 48, da die Reibbeläge 44, 46 im Allgemeinen vergleichsweise gute thermische Isolatoren sind.

Aus der vorangehend beschriebenen Anordnung erkennt man also, dass bei der erfindungsgemäßen Kupplungsanordnung nur eine der Gruppen von Reiborganen, also beispielsweise die mit dem Gehäuse 12 verbundenen Reiborgane, zum Aufbau der Fluidzirkulation beitragen, während die andere Gruppe von Reiborganen, hinsichtlich der Erzeugung dieser Fluidzirkulation sich allgemein neutral verhält.

In dem mit der Linie L umfassten Abschnitt der Fig. 2 ist eine Variante gezeigt, bei welcher der ringartige Körperbereich 76 des Reibbelagträgers 48 sich bis in den radial inneren Endbereich der Reibbelagsegmente 80 bzw. 82 erstreckt. Hier wird also die Fluidförderwirkung ausschließlich durch die in Umfangsrichtung orientierten Seiten bzw. Oberflächen 84 bzw. 86 der Reibbelagsegmente 80 bzw. 82 induziert. Grundsätzlich wäre auch die umgekehrte Anordnung denkbar, bei welcher in dem nicht mit der Strichlinie L eingefassten Bereich zwar der Reibbelagträger 48 die erkennbaren Belagtragesegmente 78 aufweist, die Reibbeläge 44, 46 aber nicht segmentiert, sondern ringartig durchlaufend sind. Es bleiben dann nur noch die zwischen den beiden ringartigen Reibbelagsegmenten vorhandenen Umfangsflächen 88 der Belagtragesegmente 78 vorhanden, die dann zur Fluidförderwirkung beitragen. Bei dieser Variante kann bei verminderter zur Fluidförderung beitragender Oberfläche die reibend wirksam werdende Oberfläche vergrößert werden und somit die Belastung der Reibbeläge gemindert werden.

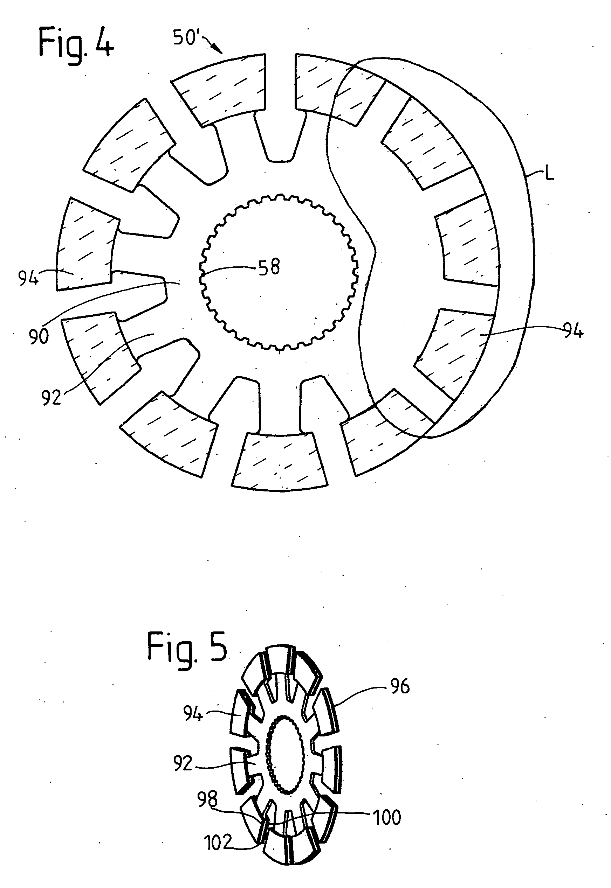

Die vorangehend beschriebenen Effekte können auch dann erreicht werden, wenn die Funktionalität der beiden Gruppen von Reiborganen 32, 34, 36 einerseits und 50, 52 andererseits vertauscht werden. D.h. auch wenn die Reibbeläge nicht an den mit dem Gehäuse 12 drehfesten Reiborganen, sondern an den mit dem Abtriebsorgan drehfesten Reiborganen vorgesehen sind, während an den anderen Reiborganen keine Reibbeläge vorgesehen sind, kann der Aufbau einer Fluidzirkulation erlangt werden. In den Figuren 4 und 5 ist ein abgewandeltes Reiborgan 50' hierfür dargestellt. Man erkennt, dass dieses einen ringartig umlaufenden Körperbereich 90 aufweist, der nunmehr an seiner Innenumfangsseite die Verzahnung 58 trägt. Von diesem ringartigen Körperbereich 90 gehen Belagtrageabschnitte 92 nach radial außen aus, die an beiden axialen Seiten nunmehr Belagsegmente 94, 96 tragen. Auch hier entstehen in Umfangsrichtung orientierte Oberflächen 98, 100 an den Reibbelagsegmenten 94, 96 und 102 an den Belagtragesegmenten 92, die bei Rotation zur Erzeugung einer Fluidzirkulation beitragen. Auch hier ist selbstverständlich eine Ausgestaltung möglich, wie sie in dem mit der Linie L umfassten Abschnitt des Reiborgans 50' erkennbar ist. Hier ist der Reibbelagträger nicht in Entsprechung zu den Reibbelagsegmenten segmentiert, so dass der Fluidfördereffekt hier durch die in Umfangsrichtung orientierten Flächen der Reibbelagsegmente 94 bzw. 96 erzeugt wird.

Die Anordnung, bei welcher die nach radial innen hin drehfest mit dem Abtriebsorgan gekoppelten Reiborgane 50, 52 so wie in den Figuren 4 und 5 dargestellt ausgebildet sind, ist hinsichtlich des axial beanspruchten Bauraums insofern vorteilhaft, als dann, wenn die beiden nach radial außen hin angebundenen Reiborgane 32, 34 dann plattenartig ausgestaltet sind, der in Fig. 1 erkennbare Reibbelag 44 zwischen dem Reiborgan 32 und dem Anpresselement 74 nicht vorhanden ist. Gleichwohl könnte auch bei der in den Figuren 1 bis 3 gezeigten Variante an dem Reiborgan 32 der zum Anpresselement 74 hin orientierte Reibbelag 44 weggelassen werden, da im Allgemeinen das Anpresselement 74 und das Kolbenelement 66 mit dem Gehäuse 12 drehfest sind, zumindest durch die im Bereich der Dichtungsorgane vorhandene Reibwirkung. Gleichwohl wäre dann immer noch das elementare erfindungsgemäße Prinzip erfüllt, dass bei keinem Reiborgan, das an einer axialen Seite einen Reibbelag trägt, an der anderen axialen Seite eine unmittelbare Reibbeaufschlagung des Reibbelagträgers durch ein anderes Reiborgan erzeugt wird.

Weiter sei darauf hingewiesen, dass selbstverständlich die Prinzipien der Erfindung auch mit anderen Anzahlen der jeweiligen Reiborgane Geltung haben. So könnte beispielsweise bei der Ausgestaltungsform der Fig. 1 das Reiborgan 34 zusammen mit dem Reiborgan 52 weggelassen werden, so dass nur ein zur Abtriebsseite hin drehfest angebundenes Reiborgan vorhanden ist. Auch in dem Fall, in dem die zur Fluidförderwirkung beitragenden Reiborgane mit der Abtriebsseite drehfest gekoppelt sind, gilt dies entsprechend.

Es sei darauf hingewiesen, dass im Sinne der vorliegenden Erfindung mit Hinblick auf die zur Fluidförderung beitragenden Oberflächen der Ausdruck "in Umfangsrichtung orientiert" nicht nur den in den Figuren dargestellten Fall umfasst, in welchem die jeweiligen Oberflächennormalen eine Umfangs- bzw. Tangentenorientierung aufweisen. Auch bezüglich dieser Umfangs- bzw. Tangentenrichtung angestellte Oberflächen, also Oberflächen, deren Flächennormale bezüglich einer zur Drehachse orthogonalen Ebene geneigt stehen, gleichwohl aber bei vektorieller Zerlegung eine Umfangskomponente aufweisen, sind im Sinne der vorliegenden Ausführungen als in Umfangsrichtung orientierte Oberflächen zu verstehen.

## Patentansprüche

1. Kupplungsanordnung, insbesondere für ein Kraftfahrzeug, umfassend:
- eine mit Fluid gefüllte oder füllbare Gehäuseanordnung (12),
- wenigstens ein mit der Gehäuseanordnung (12) um eine Drehachse (A) gemeinsam drehbares erstes Reiborgan (32, 34, 36),
- wenigstens ein mit einem Abtriebsorgan (64) um die Drehachse (A) gemeinsam drehbares zweites Reiborgan (50, 52; 50'), das zur Herstellung einer Reibwechselwirkung in Anlage an wenigstens einem ersten Reiborgan (32, 34, 36) bringbar ist,
**dadurch gekennzeichnet,**
- **dass** das wenigstens eine erste Reiborgan (32, 34, 36) oder das wenigstens eine zweite Reiborgan (50') einen Reibbelagträger (48) aufweist, der an jeder axialen Seite, an der dieses Reiborgan reibend wirksam ist, eine Reibbelaganordnung (44, 46; 94, 96) trägt,
- **dass** wenigstens bei einem einen Reibbelagträger (48) mit Reibbelaganordnung (44, 46; 94, 96) aufweisenden Reiborgan (32, 34, 36; 50') eine Fluidförderflächenanordnung (84, 86, 88; 98, 100, 102) zur Erzeugung einer die Reiborgane (32, 34, 36, 50, 52; 50') wenigstens bereichsweise umströmenden Fluidzirkulation vorgesehen ist.

2. Kupplungsanordnung nach Anspruch 1,
**dadurch gekennzeichnet, dass** in axialer Richtung nicht zwei erste Reiborgane (32, 34, 36) unmittelbar aufeinander folgen und dass in axialer Richtung nicht zwei zweite Reiborgane (50, 52) unmittelbar aufeinander folgen.

3. Kuppiungsanordnung nach Anspruch 1 oder 2,
**dadurch gekennzeichnet, dass** dasjenige Reiborgan von wenigstens einem ersten Reiborgan (32, 34, 36) und wenigstens einem zweiten Reiborgan (50), das keine Reibbelaganordnung aufweist, im Wesentlichen plattenartig ausgebildet ist.

4. Kupplungsanordnung nach einem der Ansprüche 1 bis 3,
**dadurch gekennzeichnet, dass** die Fluidförderflächenanordnung (84, 86, 88; 98, 100, 102) an einer Reibbelaganordnung (44, 46; 94, 96) oder/und einem Reibbelagträger (48) wenigstens eine in Umfangsrichtung orientierte Fluidförderfläche (84, 86, 88; 98, 100, 102) umfasst.

5. Kupplungsanordnung nach Anspruch 4,
**dadurch gekennzeichnet, dass** die Reibbelaganordnung (44, 46; 94, 96) eine Mehrzahl von in Umfangsrichtung aufeinander folgenden Reibbelagsegmenten (80, 82; 94, 96) aufweist, die mit einander zugewandten Umfangsflächen (84, 86, 88; 98, 100, 102) wenigstens einen Teil der Fluidförderflächenanordnung (84, 86, 88; 98, 100, 102) bilden.

6. Kupplungsanordnung nach Anspruch 4 oder 5,
**dadurch gekennzeichnet, dass** der Reibbelagträger (48) wenigstens ein Reibbelagtragesegment (78; 92) aufweist, welches mit einer in Umfangsrichtung orientierten Fläche (88, 102) wenigstens einen Teil der Fluidförderflächenanordnung (84, 86, 88; 98, 100, 102) bildet.

7. Kupplunganordnung nach Anspruch 5 und Anspruch 6,
**dadurch gekennzeichnet, dass** eine Umrisskontur eines Reibbelagträgersegments (78, 92) in einem ein Reibbelagsegment (80, 82; 94, 96) tragenden Bereich im Wesentlichen einer Umrisskontur eines daran getragenen Reibbelagsegments (80, 82; 94, 96) entspricht.
